(19) Europäisches Patentamt
European Patent Office
Office européen des brevets

(11) **EP 4 460 105 A1**

(12) **EUROPEAN PATENT APPLICATION**
published in accordance with Art. 153(4) EPC

(43) Date of publication:
**06.11.2024 Bulletin 2024/45**

(21) Application number: **21969544.2**

(22) Date of filing: **30.12.2021**

(51) International Patent Classification (IPC):
***H04W 52/02*** (2009.01)

(52) Cooperative Patent Classification (CPC):
H04W 52/02; Y02D 30/70

(86) International application number:
**PCT/CN2021/142953**

(87) International publication number:
**WO 2023/123179 (06.07.2023 Gazette 2023/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **HE, Chuanfeng
Dongguan, Guangdong 523860 (CN)**

(74) Representative: **Novagraaf Technologies
Bâtiment O2
2, rue Sarah Bernhardt
CS90017
92665 Asnières-sur-Seine Cedex (FR)**

(54) **TERMINAL DEVICE ENERGY SAVING METHOD, TERMINAL DEVICE, NETWORK DEVICE, AND STORAGE MEDIUM**

(57)    The present application provides a terminal device energy saving method, a terminal device, a network device, and a storage medium, for use in realizing energy saving of a terminal device by using a proper signal transmission mode. The embodiments of the present application may comprise: a terminal device receives a first wake-up signal or a second wake-up signal according to at least one of a preset rule, a discontinuous reception (DRX) state, indication information, and the current state of the terminal device, wherein the first wake-up signal is carried by a wake-up radio (WUR) signal, and the second wake-up signal is not carried by a WUR signal.

FIG. 3

**Description**

**TECHNICAL FIELD**

The present disclosure relates to the field of communication technologies, in particular to an energy saving method for a terminal device, a terminal device, a network device, and a storage medium.

**BACKGROUND**

In the R15 standard, a user equipment (UE) achieves energy saving based on discontinuous reception (DRX) and a paging mechanism. In the R16 standard and the R17 standard, for the DRX and the paging, corresponding wake-up signals are defined to indicate the UE to receive related information for a physical downlink control channel (PDCCH), such that the energy saving is further achieved. The information is carried over the PDCCH. New wake-up signals based on a wake-up receiver are introduced into the R18-R19 standards. Problems to be solved now are how to transmit the wake-up signal over the network and how to receive the wake-up signal by a terminal to save energy for the terminal.

**SUMMARY**

Embodiments of the present disclosure provide an energy saving method for a terminal device, a terminal device, a network device, and a storage medium, to save anergy for the terminal device in a proper signal transmission mode.

A first aspect of the embodiments of the present disclosure provides an energy saving method for a terminal device. The method includes:
receiving, by the terminal device, a first wake-up signal or a second wake-up signal based on at least one of a predetermined rule, a DRX state, indication information, or a current state of the terminal device, wherein the first wake-up signal is carried over a wake-up radio (WUR) signal, and the second wake-up signal is not carried over the WUR signal.

A second aspect of the embodiments of the present disclosure provides an energy saving method for a terminal device. The method includes:
transmitting, by a network device, a first wake-up signal or a second wake-up signal based on at least one of a predetermined rule, a DRX state, indication information, or a current state of the terminal device, wherein the first wake-up signal is carried over a WUR signal, and the second wake-up signal is not carried over the WUR signal.

A third aspect of the embodiments of the present disclosure provides a terminal device. The terminal device includes:

a transceiver, configured to receive a first wake-up signal or a second wake-up signal based on at least one of a predetermined rule, a DRX state, indication information, or a current state of the terminal device, wherein
the first wake-up signal is carried over a WUR signal, and the second wake-up signal is not carried over the WUR signal.

A fourth aspect of the embodiments of the present disclosure provides a network device. The network device includes:

a transceiver, configured to transmit a first wake-up signal or a second wake-up signal based on at least one of a predetermined rule, a DRX state, indication information, or a current state of the terminal device, wherein
the first wake-up signal is carried over a WUR signal, and the second wake-up signal is not carried over the WUR signal.

A fifth aspect of the embodiments of the present disclosure provides a terminal device. The terminal device includes:

a memory storing executable program codes; and
a transceiver coupled to the memory;
wherein the transceiver is configured to perform the method according to the first aspect of the present disclosure.

A sixth aspect of the embodiments of the present disclosure provides a network device. The network device includes:

a memory storing executable program codes; and

a transceiver coupled to the memory;
wherein the transceiver is configured to perform the method according to the second aspect of the present disclosure.

Another aspect of the embodiments of the present disclosure provides a computer-readable storage medium. The computer-readable storage medium stores one or more instructions, wherein the one or more instructions, when loaded and executed by a processor, cause the processor to perform the method according to the first aspect or the second aspect of the present disclosure.

Another aspect of the embodiments of the present disclosure provides a chip. The chip is coupled to the memory in a terminal device, such that the chip, when calling program instructions stored in the memory during operation, causes the terminal device to perform the method according to the first aspect or the second aspect of the present disclosure.

In the technical solutions in the embodiments of the present disclosure, the terminal device receives a first wake-up signal or a second wake-up signal based on at least one of a predetermined rule, a DRX state, indication information, or a current state of the terminal device. The first wake-up signal is carried over a WUR signal, and the second wake-up signal is not carried over the WUR signal. That is, a proper signal transmission mode is used to receive corresponding wake-up signals, such that energy is saved for the terminal device.

## BRIEF DESCRIPTION OF DRAWINGS

FIG. 1A is a schematic diagram illustrating whether a terminal device monitors a PDCCH within a DRX on duration;
FIG. 1B is a schematic diagram illustrating whether UE receives paging in a corresponding paging frame (PF) or paging occasion (PO);
FIG. 1C is a systematic block diagram of a wake-up receiver;
FIG. 1D is a schematic diagram of a position of a PF in a DRX cycle and a position of a PO in the PF;
FIG. 1E is a schematic diagram of a DRX cycle according to the present disclosure;
FIG. 1F is a schematic diagram of a process of switching a DRX cycle;
FIG. 2 is a systematic architecture diagram of a communication system applied in the embodiments of the present disclosure;
FIG. 3 is a schematic diagram of an energy saving method for a terminal device according to some embodiments of the present disclosure;
FIG. 4A is a schematic diagram of determination of a wake-up signal transmission mode based on a predetermined rule according to some embodiments of the present disclosure;
FIG. 4B is a schematic diagram of determination of a wake-up signal transmission mode based on a DRX state according to some embodiments of the present disclosure;
FIG. 4C is a schematic diagram of determination of a wake-up signal transmission mode based on a DRX state according to some embodiments of the present disclosure;
FIG. 4D is a schematic diagram of determination of a wake-up signal transmission mode based on indication information according to some embodiments of the present disclosure;
FIG. 5 is a schematic diagram of a terminal device according to some embodiments of the present disclosure;
FIG. 6 is a schematic diagram of a network device according to some embodiments of the present disclosure;
FIG. 7 is a schematic diagram of a terminal device according to some embodiments of the present disclosure; and
FIG. 8 is a schematic diagram of a network device according to some embodiments of the present disclosure.

## DETAILED DESCRIPTION

The technical solutions of the embodiments of the present disclosure are described hereinafter in combination with the accompanying drawings in the embodiments of the present disclosure. It is obvious that the described embodiments are merely part but not all of the embodiments of the present disclosure. All other embodiments derived by those skilled in the art without creative efforts based on the embodiments in the present disclosure are within the protection scope of the disclosure.

1. Energy saving for UE in a connected state

In evolution of the 5th generation mobile communication technology (5G), higher requirements for energy saving for the UE are presented. For example, for a current DRX mechanism, the UE is required to constantly detect a PDCCH within each on duration to determine whether a NodeB (NB) dispatches data transmission transmitted to the UE. However, most UEs are not required to receive data transmission for a long time and are still required to keep a regular wake-up mechanism to monitor possible downlink transmissions. For such UE, the energy saving requires to be further optimized.

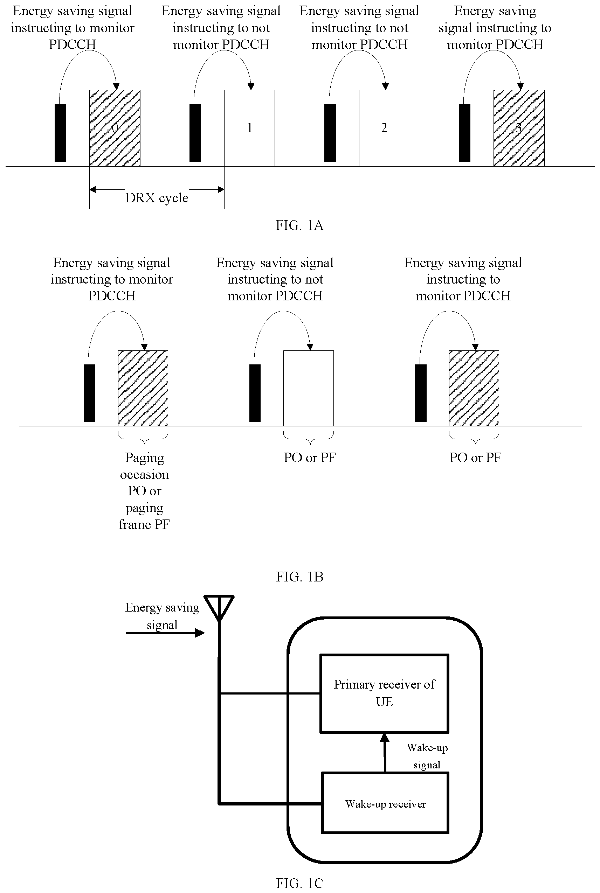

In the R16 standard, energy saving signals are introduced to achieve further energy saving. The energy saving signals are used in combination with the DRX mechanism, and the terminal receives an instruction of an energy saving wake-up signal prior to the DRX on duration. In the case that data is to be transmitted by the terminal in the DRX cycle, the energy saving wake-up signal "wakes up" the terminal to monitor the PDCCH within the DRX on duration. Otherwise, in the case that no data is to be transmitted by the terminal in the DRX cycle, the energy saving wake-up signal does not "wake up" the terminal, and the terminal is not required to monitor the PDCCH within the DRX on duration. Compared with the current DRX mechanism, in the case that no data is to be transmitted by the terminal, the terminal does not monitor the PDCCH within the DRX on duration, such that the energy saving is achieved. The energy saving signals are carried in a downlink control information (DCI) format 2_6. A duration of the terminal other than the DRX on duration is referred to as an inactive duration, and a duration within the DRX on duration is referred to as the on duration. The process of the energy saving signal instructing whether the terminal monitors the PDCCH within the DRX on duration is shown in FIG. 1A, and FIG. 1A is a schematic diagram illustrating whether a terminal device monitors a PDCCH within a DRX on duration.

In the R17 standard, the energy saving for the UE in the connected state is further enhanced, an enhancement solution of switching search space set groups in R16 is added, and the PDCCH detection is skipped as required to achieve the energy saving, that is, a PDCCH skipping solution. Control information related to the switching of the search space set groups and the PDCCH skipping are also carried over the PDCCH.

2. Energy saving for UE in an idle/inactive state

The UE in a radio resource control (RRC) idle/inactive state receives a paging message in a DRX mode. A PO is present in a DRX cycle, and the UE only receives the paging message on the PO and does not receive the paging message outside of the PO, such that the energy saving is achieved. However, a probability of paging the UE in actual scenarios is not high. The UE periodically detects the PDCCH on the corresponding PO, but does not detect paging indication information to the UE, such that the power is wasted. Similar to the energy saving for the UE in the connected state in the R16 standard, the energy saving for UE in the idle state in receiving the paging message is optimized in the R17 standard, and a similar energy saving signal is added. An energy saving signal is referred to as a padding early indication (PEI) and is used to indicate whether the UE receives a paging PDCCH on a target PO prior to the target PO. The energy saving signal carried over the PDCCH is carried in a DCI format 2_7. The energy saving signal carried over the PDCCH carries more energy saving information, for example, sub-grouping information for indicating UE sub-groups corresponding to the energy saving signal. Sub-grouping refers to further grouping of a plurality of UEs corresponding to a PO calculated by the UE-ID, and the UE whether to receive the paging on the target PO is accurately indicated by combining the sub-grouping information and the energy saving information.

As shown in FIG. 1B, FIG. 1B is a schematic diagram illustrating whether UE receives paging in a corresponding PF or PO. That is, the energy saving signal indicates whether the UE of one or more paging sub-groups receives paging in the corresponding PF or PO.

3. Wake-up receiver

For further energy saving, the wake-up receiver is added to receive the energy saving signal in R18 standard. The wake-up receiver is extremely low cost, extremely low complexity and extremely low power consumption, and mainly receives the energy saving signal in an envelope detection mode. Thus, the energy saving signal received by the wake-up receiver is different from the signals defined by the R16 standard and the R17 standard carried over the PDCCH in the modulation mode and waveform. The energy saving signal is mainly an envelope signal for performing an ask modulation (ASK) on carrier signals. The demodulation of the envelope signal is mainly performed by a low power consumption circuit driven by the energy provided by the radio frequency signal, and thus the envelope signal may be passive. The wake-up receiver can also be powered by the terminal. Regardless of the power supply mode, the power consumption of the receiver is reduced compared with the traditional receiver of the UE traditional. The wake-up receiver can be combined with the UE as an additional module of the UE receiver, or the wake-up receiver can be used as a separate wake-up function module of the UE.

As shown in FIG. 1C, FIG. 1C is a systematic block diagram of a wake-up receiver. The wake-up receiver receives the energy saving signal. In the case that the UE is required to turn on the receiver, a primary receiver of the UE is turned on by the wake-up signal. Otherwise, the primary receiver of the UE is turned off.

4. Paging

In a new radio (NR) system, the network initiates paging to the UE in the idle and RRC-connected state. The paging process is triggered by a core network or a NB, and is used to transmit a paging request to the UE in the idle state, or to notify update of system information and instruct the UE to receive information, such as the earthquake and tsunami warning system (ETWS), the commercial mobile alert system (CMAS), or the like. Upon receiving the paging message from the core network, the NB interprets the content to acquire a tracking area identity (TAI) list of the UE, and makes air paging in a cell belonging to the tracking area in the list. The core network domain does not decode the paging message on the NB, and transmits the paging message to the UE. Upon receiving the paging message from the core network, the NB gathers paging messages from UEs on the same PO into one paging message, and transmits the paging message to the relevant UE over the paging channel. The UE receives paging parameters over the system message, calculates the PO based on its own UE_ID, and receives the paging message at the corresponding time. The paging message is carried over a physical downlink shared channel (PDSCH), and the UE acquires the paging indication information by detecting the PDCCH scrambled by a paging radio network temporary identity (P-RNTI) and thus receives the paging message. The UE in the idle state saves power in the DRX mode. The UE acquires DRX related information from a system information block (SIB) 2. The paging message is received by monitoring the PDCCH scrambled by P-RNTI on a PO in the PF in the DRX cycle.

The PF indicates a system frame number (SFN) on which the paging message emerges, and the PO indicates a possible moment. A PF may contain one or more POs. For each DRX cycle or paging cycle, the UE is only required to monitor to its own PO. An SFN satisfying the following formula is used as a PF:

$$(SFN + PF\_offset) \bmod T = (T \ div \ N)*(UE\_ID \bmod N).$$

In the PF, an index, that is, i_s, of the PO corresponding to the UE_ID is calculated by the following formula:

$$i\_s = floor \ (UE\_ID/N) \bmod Ns.$$

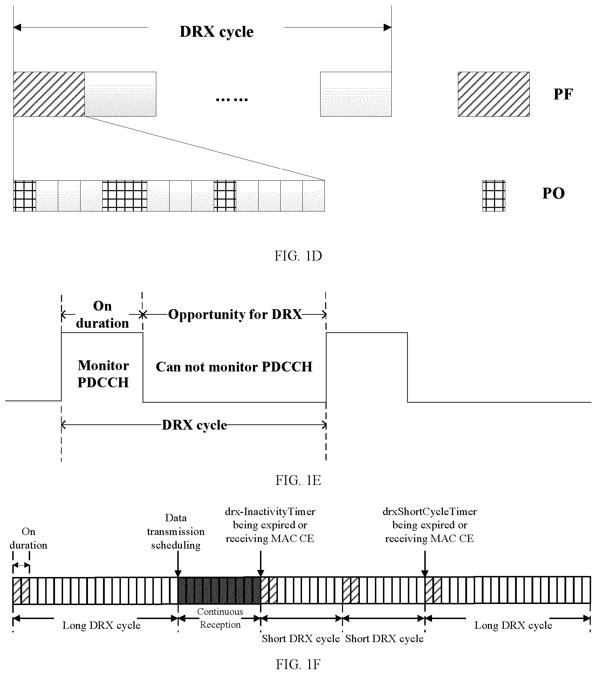

T represents the DRX cycle of the UE, mod represents a modulo operation, div represents a division operation, and floor represents a rounding-down operation. In the case that the default DRX cycle indicated in the system message is T_sib, and the DRX value T_ue of UE is configured, T = min(T_ue, T_sib). In the case that T_ue is not configured, the default value indicated in the system message is used, T =T_sib. UE_ID= (5G-S-TMSI mod 1024). N is the number of PFs in the T. Ns is the number of POs in a PF. PF_offset is used to determine a frame offset of the PF. As shown in FIG. 1D, FIG. 1D shows a schematic diagram of a position of a PF in a DRX cycle and a position of a PO in the PF.

5 DRX

For reduction of the power consumption of terminal, long-term evolution (LTE) and the NR system have the DRX mechanism, such that the terminal is not required to keep the receiver on in the case that no data is to be received, and enters the DRX state to achieve the power saving. The DRX mechanism includes that a DRX cycle is configured for the UE in the RRC_CONNECTED state, and a DRX cycle consists of the "on duration" and the "opportunity for DRX." Within the "on duration," the UE monitors and receives downlink channels and signals, including the PDCCH. During the "opportunity for DRX," the UE does not receive the downlink channels and signals, such as the PDCCH, to reduce the power consumption. As shown in FIG. 1E, FIG. 1E is a schematic diagram of a DRX cycle according to the present disclosure.

The DRX cycle of the UE includes a short cycle and a long cycle. In the case that the UE is in the short DRX cycle, the UE tuns on and restarts a timer based on receiving situations of the data schedule. The UE switches to the long DRX cycle in response to the timer being expired to further save power. Meanwhile, the network also enters the short DRX cycle or long DRX cycle based on the DRX command. The DRX command is transmitted to the UE over a medium access control (MAC) control element (CE).

As shown in FIG. 1F, FIG. 1F is a schematic diagram of a process of switching a DRX cycle. Assuming that the UE is configured with the short DRX cycle and long DRX cycle, and the UE is in the long DRX cycle state, then the UE starts or restarts the drx-Inactivity Timer in receiving the data schedule. In the case that the timer is expired or the UE receives a DRX command MAC CE, the UE enters the short DRX cycle, and starts a short DRX cycle timer (drxShortCycleTimer). In the case that the timer is expired or the UE receives a long DRX command MAC CE, the UE enters the long DRX cycle state. The UE is required to detect the PDCCH prior to expiration of the drx-Inactivity Timer. The UE is also required to perform the discontinuous based on the short DRX cycle prior to expiration of the drxShortCycleTimer.

In the R15 standard, the UE achieves the energy saving by the DRX and the paging mechanism. In the R16 standard and R17 standard, corresponding wake-up signals are defined for the DRX and the paging and are used to instruct the UE to receive the related information for the PDCCH, such that the energy saving is further achieved. All information is carried over the PDCCH. In the R18 standard and the R19 standard, new wake-up signals are added based on the wake-up receiver. The problems to be solved currently are how to transmit the wake-up signal over the network and how to receive the wake-up signal by the terminal to save energy for the terminal.

The embodiments of the present disclosure are described in conjunction with the network device and the terminal device. The terminal device is also referred to as a user equipment, an access terminal, a user unit, a user station, a mobile station, a mobile station, a remote platform, a remote terminal, a mobile equipment, a user terminal, a terminal, a wireless communication equipment, a user agent or user device, or the like.

The terminal device is a station (ST) in a WLAN, a cellular phone, a cordless phone, a Session Initiation Protocol (SIP) phone, a wireless local loop (WLL) station, a personal digital assistant (PDA) device, a hand-held device with the wireless communication capability, a computing device or other processing devices connected to a wireless modem, a vehicle-mounted device, a wearable device, or a next generation communication system, such as the terminal device in the NR network, or a terminal device in an evolved public land mobile network (PLMN) network, or the like.

In the embodiments of the present disclosure, the terminal device is deployed on the land, including indoor or outdoor, handheld, wearable, or in vehicles; or deployed on the water surface (such as a ship, and the like); or deployed in the air (such as an airplane, a balloon, a satellite, or the like).

In the embodiments of the present disclosure, the terminal device is a mobile phone, a pad, a computer with a wireless transceiver function, a virtual reality (VR) terminal device, an augmented reality (AR) terminal device, an industrial control wireless terminal device, a self-driving wireless terminal device, a remote medical wireless terminal device, a smart grid wireless terminal device, a transportation safety wireless terminal device, a smart city wireless terminal device or smart home wireless terminal device, or the like.

As examples and not limitations, the terminal device may also be a wearable device in the embodiment of the present disclosure. The wearable device is also referred to as a wearable smart device, and is a generic name for smart design and development of wearable devices using wearable technologies for daily wear, such as glasses, gloves, watches, clothing, and shoes. The wearable device is a portable device that is directly worn on the body or integrated into clothing or accessories of the user. The wearable device is not only a hardware device, but also implements powerful functions by software support, data interaction, and cloud interaction. The generalized wearable smart device includes full-functions and large-size devices that achieve all or part of functions without depending on the smart phone, such as smart watches or smart glasses, or the like, and devices that only focus on a type of application functions and are required to be used with other devices such as the smart phone, such as smart bracelets and smart jewelry for physical signs monitoring.

In the embodiments of the present disclosure, the network device is a device for communicating with the mobile device, the network device is an access point (AP) in WLAN, a base transceiver station (BTS) in GSM or CDMA, a NB in WCDMA, an evolutional NB (eNB or eNodeB) in LTE, a relay station or AP, a vehicle-mounted device, a wearable device, a network device in an NR network (gNB) or in a future evolutional PLMN network or an NTN network.

As examples and not limitations, the terminal device is mobile in the embodiments of the present disclosure. For example, the network device is a mobile device. In some embodiments, the network device is a satellite or a balloon station. For example, the satellite is a low earth orbit (LEO) satellite, a medium earth orbit (MEO) satellite, a geostationary earth orbit (GEO) satellite, a high elliptical orbit (HEO) satellite, or the like. In some embodiments, the network device is also an NB located on land, water, or the like.

In the embodiments of the present disclosure, the network device provides services for cells, and the terminal device communicates with the network device through the transmission resources (such as the frequency domain resources, or the spectrum resources) used in the cells. The cell is a cell corresponding to the network device (such as the NB), and the cell belongs to a macro NB or a NB corresponding to a small cell. The small cell includes a metro cell, a micro cell, a pico cell, a femto cell, or the like. The small cells have the small coverage and low transmission power, and are suitable for providing high rate data transmission services.

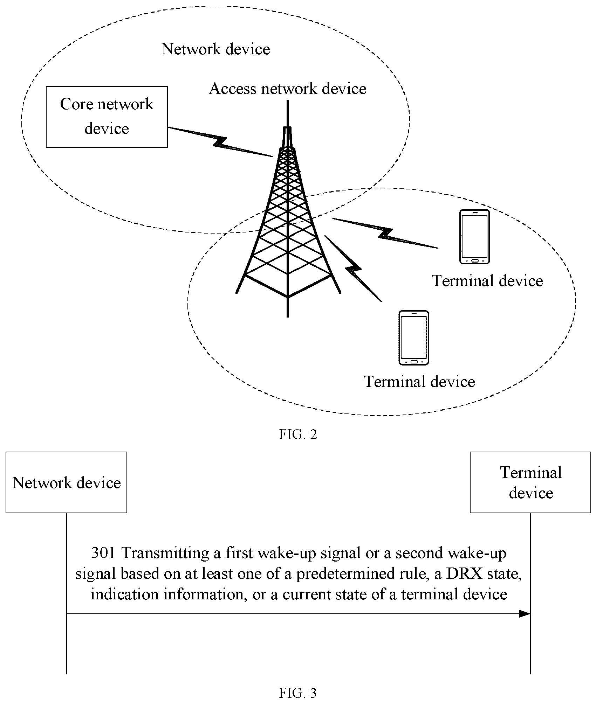

As shown in FIG. 2, FIG. 2 is a systematic architecture diagram of a communication system applied in the embodiments of the present disclosure. The communication system includes a network device, wherein the network device is a device communicating with the terminal device (or referred to as a communication terminal or a terminal). The network device provides communication coverage to a specific geographic area, and communicates with the terminal device in the coverage range. FIG. 2 illustratively shows a network device and two terminal devices. In some embodiments, the communication system includes a plurality of network devices, and a number of terminal devices are disposed in a coverage range of each network device, which are not limited in the embodiments of the present disclosure. In some embodiments, the communication system further includes a network controller, a mobile management entity, and other network entities, which are not limited in the embodiments of the present disclosure.

The network device includes an access network device and a core network device. That is, the wireless communication system further includes a plurality of core networks for communicating with the access network device. The access network device is a long-term evolution (LTE) system, a NR system (mobile communication system), or an eNB macro NB, a micro NB (also known as a "small NB"), a pico NB, an AP, a transmission point (TP), or a new generation Node B (gNodeB) system.

It should be noted that the device with a communication function in the network/system in the embodiments of the present disclosure is also referred to as a communication device. By taking the communication system in FIG. 2 as an example, the communication device includes a network device and a terminal device having the communication function, and the network device and the terminal device are specific devices in the embodiments of the present disclosure, which are not repeated herein. The communication device further includes other devices in the communication system, for example, the network controller, the mobile management entity, and other network entities, which are not limited in the embodiments of the present disclosure.

The technical solutions in the present disclosure are further described in the following embodiments. As shown in FIG. 3, FIG. 3 is a schematic diagram of an energy saving method for a terminal device according to some embodiments of the present disclosure. The method includes the following processes.

In S301, a network device transmits a first wake-up signal or a second wake-up signal based on at least one of a predetermined rule, a DRX state, indication information, or a current state of the terminal device.

A terminal device receives the first wake-up signal or the second wake-up signal based on at least one of the predetermined rule, the DRX state, the indication information, or the current state of the terminal device, wherein the first wake-up signal is carried over a WUR signal, and the second wake-up signal is not carried over the WUR signal.

In some embodiments, the second wake-up signal is carried over a PDCCH or a reference signal.

It should be understood that determination of the wake-up signal transmission mode is mainly involved in the present disclosure. The wake-up signal transmission mode includes a method for transmitting the wake-up signal by the network device and a method for receiving the wake-up signal by the terminal device. The wake-up receiver of the UE is mainly configured to receive the wake-up signal, and the wake-up signal received by the wake-up receiver is referred to as a wake-up radio signal in the present disclosure. The method for receiving the wake-up signal by the wake-up receiver is short for a wake-up signal receiving method 1. The primary receiver of the UE is mainly configured to receive the wake-up signal and the channels and the reference signal in the NR system, and the channels includes at least one of a data channel and a control channel, for example, a PDCCH carrying the wake-up signal, a PDCCH carrying the scheduling information, the reference signal, or the like. The method for receiving the wake-up signal by the primary receiver is short for a wake-up signal receiving method 2. The wake-up signal received by the wake-up signal receiving method 1 is referred to as the first wake-up signal, and the wake-up signal received by the wake-up signal receiving method 2 is referred to as the second wake-up signal.

For power saving of the terminal device, discontinuous reception is an important means to reduce the power consumption of the terminal device in detecting the downlink channel. After the wake-up signal is introduced, the power consumptions of the terminal device are different in the wake-up signal receiving methods 1 and 2, and thus the network device and the terminal device require to determine the appropriate wake-up signal transmission mode.

In some embodiments, in the case that the network device transmits the first wake-up signal or the terminal device receives the first wake-up signal, the primary transmitter of the terminal device is in an off state. In the case that the network device transmits the second wake-up signal or the terminal device receives the second wake-up signal, the primary transmitter of the terminal device is in an on state.

The following illustrates the processes of transmitting/receiving the first wake-up signal or the second wake-up signal based on the predetermined rule, the DRX state, the indication information, or the current state of the terminal device.

In a first method, the wake-up signal transmission mode is determined based on the predetermined rule.

In some embodiments, transmitting, by the network device, the first wake-up signal or the second wake-up signal based on the predetermined rule includes: in transmitting the first wake-up signal, starting, by the network device, a first timer in response to transmitting the first wake-up signal, and transmitting the second wake-up signal during operation of the first timer; and in transmitting the second wake-up signal, restarting, by the network device, the first timer in response to transmitting the second wake-up signal, and transmitting the first wake-up signal in response to the first timer being expired.

In some embodiments, receiving, by the terminal device, the first wake-up signal or the second wake-up signal based on the predetermined rule includes: in receiving the first wake-up signal, starting, by the terminal device, a first timer in response to receiving the first wake-up signal, and receiving the second wake-up signal during operation of the first timer; and in receiving the second wake-up signal, restarting, by the terminal device, the first timer in response to receiving the second wake-up signal, and receiving the first wake-up signal in response to the first timer being expired.

In some embodiments, in transmitting the first wake-up signal, starting, by the network device, the first timer in response to transmitting the first wake-up signal, and transmitting the second wake-up signal during operation of the first timer include: in transmitting the first wake-up signal, starting, by the network device, the first timer immediately or upon a first time period in response to transmitting the first wake-up signal, and transmitting the second wake-up signal during operation of the first timer; and in transmitting the second wake-up signal, restarting, by the network device, the first timer in response to transmitting the second wake-up signal, and transmitting the first wake-up signal in response to the first timer being expired include: in transmitting the second wake-up signal, restarting, by the network device, the first timer in response to transmitting the second wake-up signal, and transmitting the first wake-up signal immediately or upon a second time period in response to the first timer being expired.

In some embodiments, in receiving the first wake-up signal, starting, by the terminal device, the first timer in response to receiving the first wake-up signal, and receiving the second wake-up signal during operation of the first timer include: in receiving the first wake-up signal, starting, by the terminal device, the first timer immediately or upon a first time period in response to receiving the first wake-up signal, and receiving the second wake-up signal during operation of the first timer; and in receiving the second wake-up signal, restarting, by the terminal device, the first timer in response to receiving the second wake-up signal, and receiving the first wake-up signal in response to the first timer being expired include: in receiving the second wake-up signal, restarting, by the terminal device, the first timer in response to receiving the second wake-up signal, and receiving the first wake-up signal immediately or upon a second time period in response to the first timer being expired.

In some embodiments, the first time period and/or the second time period are predefined or indicated by the network device.

In some embodiments, a time period of the timer is predefined or indicated by the network device.

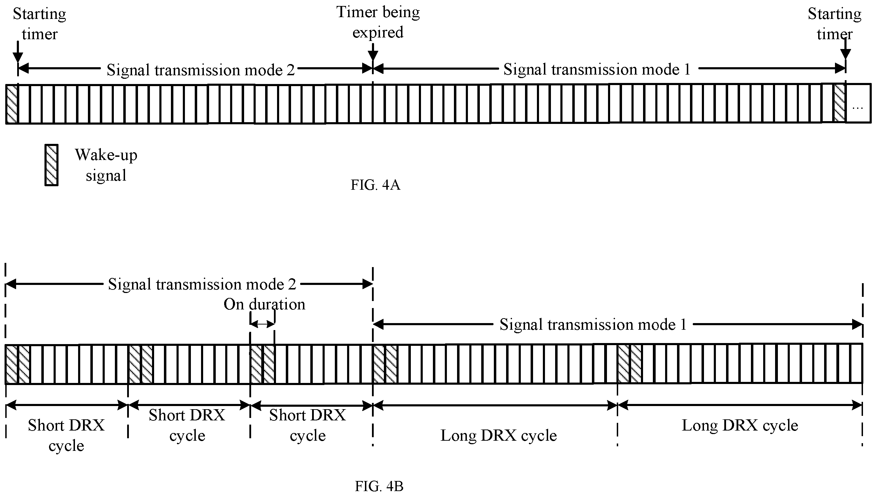

In the embodiments of the present disclosure, the wake-up signal transmission mode is determined based on the predetermined rule. In the case that the UE does not receive data sent to the UE for a long time, it is desired to reduce the downlink reception to save power, which may cause a delay in receiving the data when the data of the UE arrives. By switching between the wake-up signal receiving methods 1 and 2, the UE achieves the compromise between node and delay by using an appropriate signal receiving method. The switching between the wake-up signal receiving methods 1 and 2 is achieved based on the predetermined rule. FIG. 4A is a schematic diagram of determination of a wake-up signal transmission mode based on a predetermined rule according to some embodiments of the present disclosure.

For example, in the case that the UE receives the first wake-up signal in the wake-up signal receiving method 1, the UE starts the timer immediately or upon a time period in response to receiving the first wake-up signal and receives the second wake-up signal during operation of the timer in the wake-up signal receiving method 2. In some embodiments, the UE receives the control/data channel and the reference signal in the wake-up signal receiving method 2.

In the case that the UE receives the second wake-up signal in the wake-up signal receiving method 2, the UE restarts the timer each time the UE receives the second wake-up signal, and receives the first wake-up signal immediately or upon a time period in response to the timer being expired in the wake-up signal receiving method 2.

The time period of the timer is predefined or indicated by the network device. The "time period" is predefined or indicated by the network device. In some embodiments, the predefined value is correlated with a capability of the UE, for example, a capability of switching delay of the receiver, and the like.

In a second method, the wake-up signal transmission mode is determined based on the DRX state.

(1) In some embodiments, transmitting, by the network device, the first wake-up signal or the second wake-up signal based on the DRX state includes: transmitting the first wake-up signal in response to the terminal device being in a short DRX cycle state; and transmitting the second wake-up signal in response to the terminal device being in a long DRX cycle state.

In some embodiments, receiving, by the terminal device, the first wake-up signal or the second wake-up signal based on the DRX state includes: receiving the first wake-up signal in response to the terminal device being in a short DRX cycle state; and receiving the second wake-up signal in response to the terminal device being in a long DRX cycle state.

(2) In some embodiments, transmitting, by the network device, the first wake-up signal or the second wake-up signal based on the DRX state includes: starting a second timer in response to the terminal device entering a long DRX cycle state, transmitting, by the network device, the second wake-up signal in response to the second timer being not expired, and transmitting, by the network device, the first wake-up signal in response to the second timer being expired; and not starting the second timer in response to the terminal device being in a short DRX cycle state, and not transmitting, by the network device, a wake-up signal, or transmitting the second wake-up signal.

In some embodiments, receiving, by the terminal device, the first wake-up signal or the second wake-up signal based on the DRX state includes: starting a second timer in response to the terminal device entering a long DRX cycle state, receiving, by the terminal device, the second wake-up signal in response to the second timer being not expired, and receiving, by the terminal device, the first wake-up signal in response to the second timer being expired; and not starting the second timer in response to the terminal device being in a short DRX cycle state, and not receiving, by the terminal device, a wake-up signal, or receiving the second wake-up signal.

It should be understood that in the current NR or LTE system, the UE performs the discontinuous reception by the DRX mechanism to achieve power saving. The standard also specifies that the wake-up signal can be received prior to the "on duration" to indicate whether to detect the PDCCH within the "on duration." The wake-up signal is carried over the PDCCH, and the UE is required to start the primary receiver to receive the wake-up signal. In the case that the UE is configured with a low power consumed wake-up receiver, the UE receives the wake-up signals for the "on duration" by the wake-up receiver to further save power.

The DRX state includes a long cycle and a short cycle. In the case that the UE is in the long cycle DRX state, a power saving effect is further achieved. In this case, the wake-up signal transmission mode is a more power saving mode, for example, the wake-up signal receiving method 1, that is, receiving the wake-up signal by the wake-up receiver. In the embodiments of the present disclosure, the wake-up signal transmission mode is combined with the DRX state, that is, the wake-up signal transmission mode is determined based on the DRX state.

Illustratively, as shown in FIG. 4B, FIG. 4B is a schematic diagram of determination of a wake-up signal transmission mode based on a DRX state according to some embodiments of the present disclosure. For example, in the case that the UE is in the short DRX cycle state, the UE receives the second wake-up signal in the wake-up signal receiving method 2. In this case, the primary receiver of the UE is in the on state. In the case that the UE is in the long DRX cycle state, the UE receives the first wake-up signal in the wake-up signal receiving method 1. In this case, the primary receiver of the UE is in the off state to further save power.

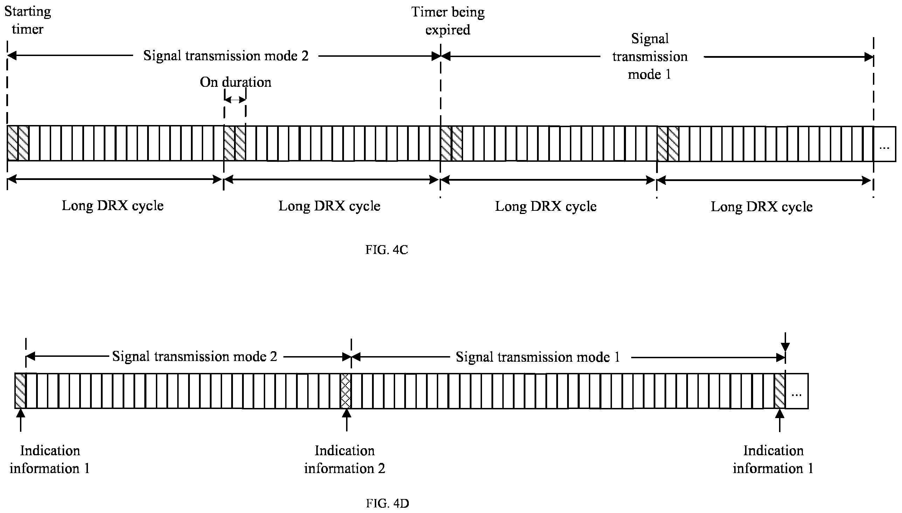

As shown in FIG. 4 C, FIG. 4C is a schematic diagram of determination of a wake-up signal transmission mode based on a DRX state according to some embodiments of the present disclosure. For example, in the case that the UE is in the long DRX cycle state, the UE starts a timer, receives the second wake-up signal during operation of the timer in the wake-up signal receiving method 2, and receives the first wake-up signal in response to the timer being expired in the wake-up signal receiving method 1. In the case that the UE is in the short DRX cycle state, the UE does not start the timer, does not receive the wake-up signal, or receives the second wake-up signal in the wake-up signal receiving method 2.

In a third method, the wake-up signal transmission mode is determined based on the indication information.

In the embodiments of the present disclosure, the UE determines the wake-up signal transmission mode based on the indication information sent and displayed or implied by the network device.

(1) In some embodiments, transmitting, by the network device, the first wake-up signal or the second wake-up signal based on the indication information includes:
in transmitting the first wake-up signal, transmitting, by the network device, the second wake-up signal in response to transmitting first indication information, wherein the first indication information includes the first wake-up signal; and in transmitting the second wake-up signal, transmitting, by the network device, the first wake-up signal in response to transmitting second indication information.

In some embodiments, receiving, by the terminal device, the first wake-up signal or the second wake-up signal based on the indication information includes:
in receiving the first wake-up signal, receiving, by the terminal device, the second wake-up signal in response to receiving first indication information, wherein the first indication information includes the first wake-up signal; and in receiving the second wake-up signal, receiving, by the terminal device, the first wake-up signal in response to receiving second indication information.

In some embodiments, in transmitting the first wake-up signal, transmitting, by the network device, the second wake-up signal in response to transmitting the first indication information includes: in transmitting the first wake-up signal, transmitting, by the network device, the second wake-up signal immediately or upon a third time period in response to transmitting the first indication information; and in transmitting the second wake-up signal, transmitting, by the network device, the first wake-up signal in response to transmitting the second indication information includes: in transmitting the second wake-up signal, transmitting, by the network device, the first wake-up signal immediately or upon a fourth time period in response to transmitting the second indication information.

In some embodiments, in receiving the first wake-up signal, receiving, by the terminal device, the second wake-up signal in response to receiving the first indication information includes: in receiving the first wake-up signal, receiving, by the terminal device, the second wake-up signal immediately or upon a third time period in response to receiving the first indication information; and in receiving the second wake-up signal, receiving, by the terminal device, the first wake-up signal in response to receiving the second indication information includes: in receiving the second wake-up signal, receiving, by the terminal device, the first wake-up signal immediately or upon a fourth time period in response to receiving the second indication information.

In some embodiments, the third time period and/or the fourth time period are predefined or indicated by a network device.

In some embodiments, the indication information is carried over a control channel or a higher layer signaling.

Illustratively, as shown in FIG. 4D, FIG. 4D is a schematic diagram of determination of a wake-up signal transmission mode based on indication information according to some embodiments of the present disclosure. The network device directly indicates the wake-up signal transmission mode based on the indication information. For example, in the case that the first wake-up signal is received in the wake-up signal receiving method 1, it is switched to the wake-up signal receiving method 2 immediately or upon a third time period in response to receival of the first indication information to receive the second wake-up signal. In some embodiments, the control/data channel and the reference signal are received in the wake-up signal receiving method 2. The first wake-up signal is determined as the indication information. In the case that the UE receives the second wake-up signal in the wake-up signal receiving method 2, the UE receives the first wake-up signal immediately or upon a time period in response to receiving the indication information in the wake-up signal receiving method 1. The indication information is carried over the control channel, for example, the PDCCH, or carried over the MAC CE, the RRC signaling, or the like.

(2) In some embodiments, transmitting, by the network device, the first wake-up signal or the second wake-up signal based on the indication information includes:

transmitting, by the network device, the first wake-up signal in response to the terminal device entering a long DRX cycle state based on a timer or a higher layer command; and transmitting, by the network device, the second wake-up signal in response to the terminal device entering a short DRX cycle state based on the timer or the higher layer command.

In some embodiments, receiving, by the terminal device, the first wake-up signal or the second wake-up signal based on the indication information includes:

receiving, by the terminal device, the first wake-up signal in response to the terminal device entering a long DRX cycle state based on a timer or a higher layer command; and receiving, by the terminal device, the second wake-up signal in response to the terminal device entering a short DRX cycle state based on the timer or the higher layer command.

In some embodiments, the higher layer command is a MAC CE command or an RRC command.

In some embodiments, the time period of the timer is predefined or indicated by the network device.

Illustratively, the UE determines the wake-up signal transmission mode based on the indication information in combination with the DRX state. For example, in the current DRX mechanism, the switching of the DRX cycle is achieved based on the timer or the MAC CE command. In the case that the DRX cycle is switched, the signal transmission mode is implicitly determined. For example, in the case that the timer is expired and the UE enters the long DRX cycle state, the UE receives the first wake-up signal in the wake-up signal receiving method 1. In the case that the timer is not expired and the UE enters the short DRX cycle state, the UE receives the second wake-up signal in the wake-up signal receiving method 2. In the case that the UE receives the MAC CE command and the UE enters the long DRX cycle state, the UE receives the first wake-up signal in the wake-up signal receiving method 1. In the case that the UE receives the MAC CE command and the UE enters the short DRX cycle state, the UE receives the second wake-up signal in the wake-up signal receiving method 2.

(3) In some embodiments, transmitting, by the network device, the first wake-up signal or the second wake-up signal based on the indication information includes: transmitting, by the network device, the first wake-up signal based on third indication information in response to transmitting the third indication information within an on duration.

In some embodiments, receiving, by the terminal device, the first wake-up signal or the second wake-up signal based on the indication information includes: receiving, by the terminal device, the first wake-up signal based on third indication information in response to receiving the third indication information within an on duration.

In some embodiments, transmitting, by the network device, the first wake-up signal based on the third indication information in response to transmitting the third indication information within the on duration includes: transmitting, by the network device, the first wake-up signal immediately or upon a fifth time period based on the third indication information in response to transmitting the third indication information within the on duration.

In some embodiments, receiving, by the terminal device, the first wake-up signal based on the third indication information in response to receiving the third indication information within the on duration includes: receiving, by the terminal device, the first wake-up signal immediately or upon a fifth time period based on the third indication information in response to receiving the third indication information within the on duration.

In some embodiments, the third indication information is carried over the control channel or the higher layer signaling.

Illustratively, in the case that the UE receives the indication information within the "on duration," the indication information instruct the UE to switch to the receiving method 1 immediately or upon a time period to receive the wake-up signal. The indication information is carried over the control channel, for example, the PDCCH, or carried over the MAC CE, the RRC signaling, or the like.

In a fourth method, the signal transmission mode is determined based on the indication information.

In some embodiments, transmitting, by the network device, the first wake-up signal or the second wake-up signal based on the current state of the terminal device includes: transmitting the second wake-up signal in response to the terminal device being in a connected state; and transmitting the first wake-up signal in response to the terminal device being in an idle state or an inactive state.

In some embodiments, receiving, by the terminal device, the first wake-up signal or the second wake-up signal based on the current state of the terminal device includes: receiving the second wake-up signal in response to the terminal device being in a connected state; and receiving the first wake-up signal in response to the terminal device being in an idle state or an inactive state.

Illustratively, the RRC state of the UE is closely related to the data transmission of the UE. The UE in the RRC connected state transmits data, and the UE in the idle or RRC inactive state periodically detects the paging message to save power. The two wake-up signal transmission modes in the present disclosure are also closely related to the power saving of the UE. In the case that the UE is in the RRC connected state, the UE performs frequent data transmission, and the wake signal transmission mode is the wake-up signal transmission mode 2. In the case that the UE is in the idle or RRC inactive state, the UE only detects the paging messages, and the wake-up signal is received in the wake-up signal transmission mode 1.

In the technical solutions in the embodiments of the present disclosure, the terminal device receives the first wake-up signal or the second wake-up signal based on at least one of the predetermined rule, the DRX state, the indication information, or the current state of the terminal device. The first wake-up signal is carried over the WUR signal, and the second wake-up signal is not carried over the WUR signal. That is, a proper signal transmission mode is used according to data transmission situations of the terminal device to receive corresponding wake-up signals, such that energy is saved for the terminal device. For example, optimization of the power consumption of the terminal device is achieved.

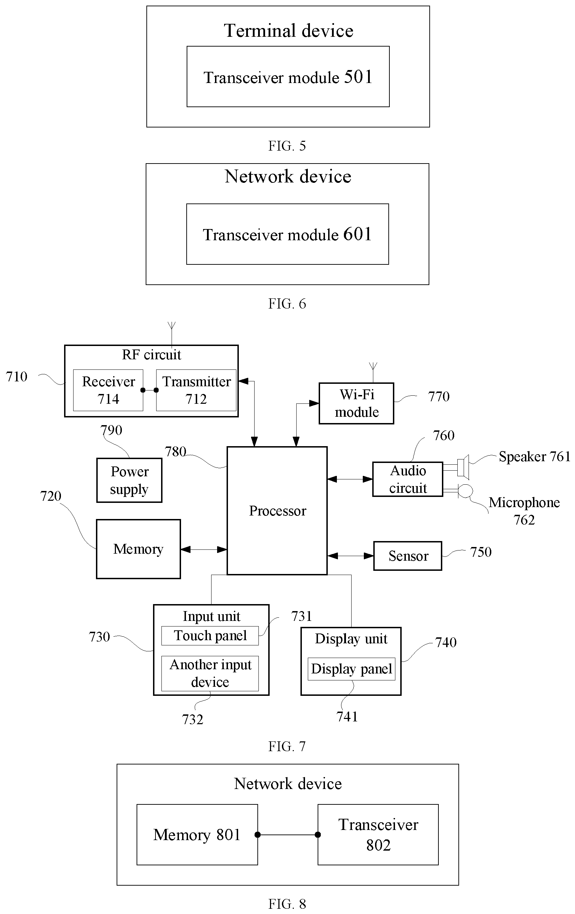

As shown in FIG. 5, FIG. 5 is a schematic diagram of a terminal device according to some embodiments of the present disclosure. The terminal device includes: a transceiver module 501, configured to receive a first wake-up signal or a second wake-up signal based on at least one of a predetermined rule, a DRX state, indication information, or a current state of the terminal device, wherein the first wake-up signal is carried over a WUR signal, and the second wake-up signal is not carried over the WUR signal.

In some embodiments, the second wake-up signal is carried over a PDCCH or a reference signal.

In some embodiments, the transceiver module 501 is further configured to: in the case that the terminal device receives the first wake-up signal, start a first timer in response to receiving the first wake-up signal, and receive the second wake-up signal during operation of the first timer; and in the case that the terminal device receives the second wake-up signal, restart the first timer in response to receiving the second wake-up signal, and receive the first wake-up signal in response to the first timer being expired.

In some embodiments, the transceiver module 501 is further configured to: in the case that the terminal device receives the first wake-up signal, start a first timer immediately or upon a first time period in response to receiving the first wake-up signal, and receive the second wake-up signal during operation of the first timer; and the transceiver module 501 is further configured to: in the case that the terminal device receives the second wake-up signal, restart the first timer in response to receiving the second wake-up signal, and receive the first wake-up signal immediately or upon a second time period in response to the first timer being expired.

In some embodiments, the transceiver module 501 is further configured to: receive the first wake-up signal in response to the terminal device being in a short DRX cycle state; and receive the second wake-up signal in response to the terminal device being in a long DRX cycle state.

In some embodiments, the transceiver module 501 is further configured to: start a second timer in response to the terminal device entering a long DRX cycle state, receive the second wake-up signal in response to the second timer being not expired, and receive the first wake-up signal in response to the second timer being expired; and not start the second timer in response to the terminal device being in a short DRX cycle state, and not receive a wake-up signal, or receive the second wake-up signal.

In some embodiments, the transceiver module 501 is further configured to: in the case that the terminal device receives the first wake-up signal, receive the second wake-up signal in response to receiving first indication information, wherein the first indication information includes the first wake-up signal; and in the case that the terminal device receives the second wake-up signal, receive the first wake-up signal in response to receiving second indication information.

In some embodiments, the transceiver module 501 is further configured to: in the case that the terminal device receives the first wake-up signal, receive the second wake-up signal immediately or upon a third time period in response to receiving the first indication information; and the transceiver module 501 is further configured to: in the case that the terminal device receives the second wake-up signal, receive the first wake-up signal immediately or upon a fourth time period in response to receiving the second indication information.

In some embodiments, the transceiver module 501 is further configured to: receive the first wake-up signal based on third indication information in response to receiving the third indication information within an on duration.

In some embodiments, the indication information is carried over a control channel or a higher layer signaling.

In some embodiments, the first time period, the second time period, the third time period, and/or the fourth time period are predefined or indicated by a network device.

In some embodiments, the transceiver module 501 is further configured to: receive the first wake-up signal in response to entering a long DRX cycle state based on a timer or a higher layer command; and receive the second wake-up signal in response to entering a short DRX cycle state based on the timer or the higher layer command.

In some embodiments, a time period of a timer is predefined or indicated by a network device.

In some embodiments, the transceiver module 501 is further configured to: receive the second wake-up signal in response to the terminal device being in a connected state; and receive the first wake-up signal in response to the terminal device being in an idle state or an inactive state.

In some embodiments, a primary receiver of the terminal device is in an off state in receiving the first wake-up signal, and the primary receiver of the terminal device is in an on state in receiving the second wake-up signal.

As shown in FIG. 6, FIG. 6 is a schematic diagram of a network device according to some embodiments of the present disclosure. The network device includes: a transceiver module 601, configured to transmit a first wake-up signal or a second wake-up signal based on at least one of a predetermined rule, a DRX state, indication information, or a current state of the terminal device, wherein the first wake-up signal is carried over a WUR signal, and the second wake-up signal is not carried over the WUR signal.

In some embodiments, the second wake-up signal is carried over a PDCCH or a reference signal.

In some embodiments, the transceiver module 601 is further configured to: in the case that the network device transmits the first wake-up signal, start a first timer in response to transmitting the first wake-up signal, and transmit the second wake-up signal during operation of the first timer; and in the case that the network device transmits the second wake-up signal, restart the first timer in response to transmitting the second wake-up signal, and transmit the first wake-up signal in response to the first timer being expired.

In some embodiments, the transceiver module 601 is further configured to: in the case that the network device transmits the first wake-up signal, start a first timer immediately or upon a first time period in response to transmitting the first wake-up signal, and transmit the second wake-up signal during operation of the first timer; and the transceiver module 601 is further configured to: in the case that the network device transmits the second wake-up signal, restart the first timer in response to transmitting the second wake-up signal, and transmit the first wake-up signal immediately or upon a second time period in response to the first timer being expired.

In some embodiments, the transceiver module 601 is further configured to: transmit the first wake-up signal in response to the terminal device being in a short DRX cycle state; and transmit the second wake-up signal in response to the terminal device being in a long DRX cycle state.

In some embodiments, the transceiver module 601 is further configured to: start a second timer in response to the terminal device entering a long DRX cycle state, transmit the second wake-up signal in response to the second timer being not expired, and transmit the first wake-up signal in response to the second timer being expired; and not start the second timer in response to the terminal device being in a short DRX cycle state, and not transmit a wake-up signal, or transmit the second wake-up signal.

In some embodiments, the transceiver module 601 is further configured to: in the case that the network device transmits the first wake-up signal, transmit the second wake-up signal in response to transmitting first indication information, wherein the first indication information includes the first wake-up signal; and in the case that the network device transmits the second wake-up signal, transmit the first wake-up signal in response to transmitting second indication information.

In some embodiments, the transceiver module 601 is further configured to: in the case that the network device transmits the first wake-up signal, transmit the second wake-up signal immediately or upon a third time period in response to transmitting the first indication information; and the transceiver module 601 is further configured to: in the case that the network device transmits the second wake-up signal, transmit the first wake-up signal immediately or upon a fourth time period in response to transmitting the second indication information.

In some embodiments, the transceiver module 601 is further configured to: transmit the first wake-up signal based on third indication information in response to transmitting the third indication information within an on duration.

In some embodiments, the indication information is carried over a control channel or a higher layer signaling.

In some embodiments, the first time period, the second time period, the third time period, and/or the fourth time period are predefined or indicated by the network device.

In some embodiments, the transceiver module 601 is further configured to: transmit the first wake-up signal in response to the terminal device entering a long DRX cycle state based on a timer or a higher layer command; and transmit the second wake-up signal in response to the terminal device entering a short DRX cycle state based on the timer or the higher layer command.

In some embodiments, a time period of a timer is predefined or indicated by the network device.

In some embodiments, the transceiver module 601 is further configured to: transmit the second wake-up signal in response to the terminal device being in a connected state; and transmit the first wake-up signal in response to the terminal device being in an idle state or an inactive state.

In some embodiments, a primary transmitter of the terminal device is in an off state in transmitting the first wake-up signal, and the primary transmitter of the terminal device is in an on state in transmitting the second wake-up signal.

As shown in FIG. 7, FIG. 7 is a schematic diagram of a terminal device according to some embodiments of the present disclosure. The terminal device includes:

by taking the terminal device being a mobile phone as an example, a radio frequency (RF) circuit 710, a memory 720, an input unit 730, a display unit 740, a sensor 750, an audio circuit 760, a wireless fidelity (Wi-Fi) module 770, a processor 780, a power supply 790, and other assemblies. The radio frequency circuit 710 includes a receiver 714 and a transmitter 712. It should be understood by those skilled in the art that the structure of the mobile phone in FIG. 7 does not limit the mobile phone, may include more or fewer parts than illustrated or combine some parts or have different part arrangements.

The various assemblies of the mobile phone are described in detail in combination with FIG. 7.

The RF circuit 710 is used to receive and transmit signals in the process of transmitting and receiving information or calling, and particularly receive the downlink information of the NB and transmit to the processor 780 for processing. In addition, the RF circuit 710 is used to transmit the design uplink data to the NB. Typically, the RF circuit 710 includes, but is not limited to, an antenna, at least one amplifier, a transceiver, a coupler, a low noise amplifier (LNA), a diplexer, and the like. In addition, the RF circuit 710 communicates with networks and other devices via wireless communication. The above wireless communication uses any communication standard or protocol, including but not limited to the global system of mobile communication (GSM), the general packet radio service (GPRS), the general packet radio service (GPRS), the code division multiple access (CDMA), the wideband code division multiple access (WCDMA), the long term evolution (LTE), the email, the short messaging service (SMS), and the like.

The memory 720 is used to store software programs and modules, and the processor 780 performs various functional applications and data processing of the mobile phone by running software programs and modules stored in the memory 720. The memory 720 mainly includes a storage program area and a storage data area. The storage program area stores the operating system and the application required for at least one function (such as a sound playback function, an image playback function, and the like). The storage data area stores the data created based on the use of the mobile phone (such as, audio data, phone book, and the like). In addition, the memory 720 includes a high-speed random access memory, and a non-volatile memory, such as at least one disk storage device, a flash memory device, or other volatile solid-state storage device.

The input unit 730 is used to receive input numeric or character information and generate key signal inputs related to user settings and functional controls of the mobile phone. In particular, the input unit 730 includes a touch panel 731 and another input device 732. The touch panel 731 is also referred to as a touch screen, which is configured to collect touch operations of the user on or near it (such as, operations of the user with a finger, a stylus, or any suitable object or accessory on or near the touch panel 731) and drive the corresponding connection device based on a predetermined program. In some embodiments, the touch panel 731 includes two parts: a touch detection device and a touch controller. The touch detection device detects touch orientations of the user, detects the signal of the touch operation, and transmits the signal to the touch controller. The touch controller receives the touch information from the touch detection device, converts the touch information to the contact coordinates, then transmits to the processor 780, and receives and perform the command from the processor 780. In addition, the touch panel 731 is achieved in resistive, capacitive, infrared and surface acoustic wave types. In addition to the touch panel 731, the input unit 730 also includes another input device 732. Specifically, another input device 732 includes, but is not limited to, one or more of a physical keyboard, a function key (such as a volume control key, a switch key, and the like), a trackball, a mouse, a joystick, or the like.

The display unit 740 is used to display information input by the user or provided to the user and various menus of the mobile phone. The display unit 740 includes a display panel 741. In some embodiments, the liquid crystal display (LCD), the organic light-emitting diode (OLED), and other forms are used to configure the display panel 741. Furthermore, the touch panel 731 covers the display panel 741. In the case of detecting a touch operation on or near the touch panel 731, the touch panel 731 transmits the touch operation to the processor 780 to determine the type of touch event, and the processor 780 provides corresponding visual output on the display panel 741 based on the type of touch event. Although the touch panel 731 and the display panel 741 are considered as two separate assemblies to realize the input and input functions of the mobile phone in FIG. 7, the touch panel 731 and the display panel 741 are integrated to realize the input and output functions of the mobile phone in some embodiments.

The mobile phone also includes at least one sensor 750, for example, a light sensor, a motion sensor, and other sensors. Specifically, the light sensor includes an ambient light sensor and a proximity sensor. The ambient light sensor adjusts the brightness of the display panel 741 based on the brightness of the ambient light, and the proximity sensor turns off the display panel 741 and/or achieve backlight in the case that the mobile phone is moved to the ear. As a kind of the motion sensor, the accelerometer sensor detects the size of acceleration in all directions (generally in three axes), and the size and direction of gravity at rest, and identify the mobile phone gesture applications (such as the horizontal and vertical screen switching, the related game, the magnetometer gesture calibration), the vibration identification related functions (such as pedometer, tapping), and the like. The gyroscope, the barometer, the hygrometer, the thermometer, the infrared sensor, and other sensors that can be configured in the phone are not repeated herein.

The audio circuit 760, the speaker 761, the microphone 762 provide the audio interface between the user and the mobile phone. The audio circuit 760 converts received audio data to an electrical signal and transmits the electrical signal to the speaker 761, and the speaker 761 converts the electrical signal to a sound signal and outputs the sound signal. In addition, the microphone 762 converts the collected sound signal to the electrical signal, the audio circuit 760 receives the electrical signal and converts the electrical signal to audio data, and outputs the audio data to the processor 780 for processing. The processed audio data is transmitted to another mobile phone via the RF circuit 710, or the processed audio data is output to the memory 720 for further processing.

Wi-Fi is a short-range wireless transmission technology. The mobile phones help users send and receive emails, browse the web page, and access streaming media, and the like by the Wi-Fi module 770, and provides users with wireless broadband Internet access. Although the Wi-Fi module 770 is shown in FIG. 7, it can be understood that the Wi-Fi module 770 is not a necessary assembly of the mobile phone and can be omitted where necessary without changing the nature of the present disclosure.

The processor 780 is the control center of the mobile phone, connects various parts of the mobile phone using various interfaces and lines, performs various functions of the phone, and processes data by running or executing software programs and/or modules stored in the memory 720 and calling data stored in the memory 720, such that the mobile phone is monitored as a whole. In some embodiments, the processor 780 includes one or more processing units. In some embodiments, the processor 780 is integrated with an application processor and the modem processor. The application processor mainly processes the operating system, the user interface, and the application, and the like. The modem processor mainly performs wireless communications. It can be understood that the modem processor can also not be integrated into the processor 780.

The mobile phone also includes a power supply 790 (such as a battery) for supplying power to various assemblies. In some embodiments, the power supply is logically connected to the processor 780 by a power management system to achieve manage charging, discharge, and power consumption. Although not shown, the mobile phone can also include a camera, a Bluetooth module, and the like, which are not detailed herein.

In the embodiments of the present disclosure, the RF circuit 710 is configured to receive a first wake-up signal or a second wake-up signal based on at least one of a predetermined rule, a DRX state, indication information, or a current state of the terminal device, wherein the first wake-up signal is carried over a WUR signal, and the second wake-up signal is not carried over the WUR signal.

In some embodiments, the second wake-up signal is carried over a PDCCH or a reference signal.

In some embodiments, the RF circuit 710 is further configured to: in the case that the terminal device receives the first wake-up signal, start a first timer in response to receiving the first wake-up signal, and receive the second wake-up signal during operation of the first timer; and in the case that the terminal device receives the second wake-up signal, restart the first timer in response to receiving the second wake-up signal, and receive the first wake-up signal in response to the first timer being expired.

In some embodiments, the RF circuit 710 is further configured to: in the case that the terminal device receives the first wake-up signal, start a first timer immediately or upon a first time period in response to receiving the first wake-up signal, and receive the second wake-up signal during operation of the first timer; and the RF circuit 710 is further configured to: in the case that the terminal device receives the second wake-up signal, restart the first timer in response to receiving the second wake-up signal, and receive the first wake-up signal immediately or upon a second time period in response to the first timer being expired.

In some embodiments, the RF circuit 710 is further configured to: receive the first wake-up signal in response to the terminal device being in a short DRX cycle state; and receive the second wake-up signal in response to the terminal device being in a long DRX cycle state.

In some embodiments, the RF circuit 710 is further configured to: start a second timer in response to the terminal device entering a long DRX cycle state, receive the second wake-up signal in response to the second timer being not expired, and receive the first wake-up signal in response to the second timer being expired; and not start the second timer in response to the terminal device being in a short DRX cycle state, and not receive a wake-up signal, or receive the second wake-up signal.

In some embodiments, the RF circuit 710 is further configured to: in the case that the terminal device receives the first wake-up signal, receive the second wake-up signal in response to receiving first indication information, wherein the first indication information includes the first wake-up signal; and in the case that the terminal device receives the second wake-up signal, receive the first wake-up signal in response to receiving second indication information.

In some embodiments, the RF circuit 710 is further configured to: in the case that the terminal device receives the first wake-up signal, receive the second wake-up signal immediately or upon a third time period in response to receiving the first indication information; and

the RF circuit 710 is further configured to: in the case that the terminal device receives the second wake-up signal, receive the first wake-up signal immediately or upon a fourth time period in response to receiving the second indication information.

In some embodiments, the RF circuit 710 is further configured to: receive the first wake-up signal based on third indication information in response to receiving the third indication information within an on duration.

In some embodiments, the indication information is carried over a control channel or a higher layer signaling.

In some embodiments, the first time period, the second time period, the third time period, and/or the fourth time period are predefined or indicated by the network device.

In some embodiments, the RF circuit 710 is further configured to: receive the first wake-up signal in response to entering a long DRX cycle state based on a timer or a higher layer command; and receive the second wake-up signal in response to entering a short DRX cycle state based on the timer or the higher layer command.

In some embodiments, a time period of a timer is predefined or indicated by the network device.

In some embodiments, the RF circuit 710 is further configured to: receive the second wake-up signal in response to the terminal device being in a connected state; and receive the first wake-up signal in response to the terminal device being in an idle state or an inactive state.

In some embodiments, a primary receiver of the terminal device is in an off state in receiving the first wake-up signal, and the primary receiver of the terminal device is in an on state in receiving the second wake-up signal.

As shown in FIG. 8, FIG. 8 is a schematic diagram of a network device according to some embodiments of the present disclosure. The network device includes: a memory 801 storing executable program codes; and a transceiver 802 coupled to the memory 801.

The transceiver 802 is configured to transmit a first wake-up signal or a second wake-up signal based on at least one of a predetermined rule, a DRX state, indication information, or a current state of the terminal device, wherein the first wake-up signal is carried over a WUR signal, and the second wake-up signal is not carried over the WUR signal.

In some embodiments, the second wake-up signal is carried over a PDCCH or a reference signal.

In some embodiments, the transceiver 802 is further configured to: in the case that the network device transmits the first wake-up signal, start a first timer in response to transmitting the first wake-up signal and transmit the second wake-up signal during operation of the first timer; and in the case that the network device transmits the second wake-up signal, restart the first timer in response to transmitting the second wake-up signal, and transmit the first wake-up signal in response to the first timer being expired.

In some embodiments, the transceiver 802 is further configured to: in the case that the network device transmits the first wake-up signal, start a first timer immediately or upon a first time period in response to transmitting the first wake-up signal, and transmit the second wake-up signal during operation of the first timer; and the transceiver 802 is further configured to: in the case that the network device transmits the second wake-up signal, restart the first timer in response to transmitting the second wake-up signal, and transmit the first wake-up signal immediately or upon a second time period in response to the first timer being expired.

In some embodiments, the transceiver 802 is further configured to: transmit the first wake-up signal in response to the terminal device being in a short DRX cycle state; and transmit the second wake-up signal in response to the terminal device being in a long DRX cycle state.

In some embodiments, the transceiver 802 is further configured to: start a second timer in response to the terminal device entering a long DRX cycle state, transmit the second wake-up signal in response to the second timer being not expired, and transmit the first wake-up signal in response to the second timer being expired; and not start the second timer in response to the terminal device being in a short DRX cycle state, and not transmit a wake-up signal, or transmit the second wake-up signal.

In some embodiments, the transceiver 802 is further configured to: in the case that the network device transmits the first wake-up signal, transmit the second wake-up signal in response to transmitting first indication information, wherein the first indication information includes the first wake-up signal; and in the case that the network device transmits the second wake-up signal, transmit the first wake-up signal in response to transmitting second indication information.

In some embodiments, the transceiver 802 is further configured to: in the case that the network device transmits the first wake-up signal, transmit the second wake-up signal immediately or upon a third time period in response to transmitting the first indication information; and the transceiver 802 is further configured to: in the case that the network device transmits the second wake-up signal, transmit the first wake-up signal immediately or upon a fourth time period in response to transmitting the second indication information.

In some embodiments, the transceiver 802 is further configured to: transmit the first wake-up signal based on third indication information in response to transmitting the third indication information within an on duration.

In some embodiments, the indication information is carried over a control channel or a higher layer signaling.

In some embodiments, the first time period, the second time period, the third time period, and/or the fourth time period are predefined or indicated by the network device.

In some embodiments, the transceiver 802 is further configured to: transmit the first wake-up signal in response to the terminal device entering a long DRX cycle state based on a timer or a higher layer command; and transmit the second wake-up signal in response to the terminal device entering a short DRX cycle state based on the timer or the higher layer command.

In some embodiments, a time period of a timer is predefined or indicated by the network device.

In some embodiments, the transceiver 802 is further configured to: transmit the second wake-up signal in response to the terminal device being in a connected state; and transmit the first wake-up signal in response to the terminal device being in an idle state or an inactive state.

In some embodiments, a primary transmitter of the terminal device is in an off state in transmitting the first wake-up signal, and the primary transmitter of the terminal device is in an on state in transmitting the second wake-up signal.

All or part of the above embodiments are achieved by software, hardware, firmware, or any combination thereof. In the case that the embodiments are achieved by the software, all or part of the above embodiments are achieved in the form of a computer program product. The computer program product includes one or more computer instructions. In the case that the computer program instructions are loaded and executed on a computer, all or part of the processes or functions described in the embodiments of the present disclosure are generated. The computer is a general purpose computer, a special purpose computer, a computer network, or other programmable device. The computer instructions are stored in a computer-readable storage medium or transmitted from one computer-readable storage medium to another computer-readable storage medium. For example, the computer instructions are transmitted from one website site, computer, server or data center to another website site, computer, server or data center in a wired (such as a coaxial cable, an optical fiber, a digital subscriber line (DSL)) or wireless (such as an infrared, wireless, microwave, and the like) mode. The computer-readable storage medium is any available medium storable in the computer or a data storage device, such as a server or data center that contains one or more integrated available mediums. The available medium is a magnetic medium (such as a floppy disk, a hard disk, a magnetic tape), an optical media (such as a DVD), or a semiconductor media (such as a solid state disk (SSD)).

The terms "first," "second," "third," "fourth," and the like (if any) in the description and claims of the present disclosure and in the accompanying drawings are used to distinguish similar objects and are not necessarily used to describe a particular order or sequence. It should be understood that the used data are interchangeable in appropriate situation, such that the embodiments herein can be achieved in an order other than that is illustrated or described herein. In addition, the terms "include," "comprise," and various variations thereof are intended to cover non-exclusive inclusions. For example, a process, a method, a system, a product or a device including a series of steps or units is not limited to those shown steps or units, and may include other steps or units that are not clearly shown or are inherent to the process, the method, the product or the device.

## Claims

1. An energy saving method for a terminal device, comprising:
   receiving, by the terminal device, a first wake-up signal or a second wake-up signal based on at least one of a predetermined rule, a discontinuous reception DRX state, indication information, or a current state of the terminal device, wherein the first wake-up signal is carried over a wake-up radio WUR signal, and the second wake-up signal is not carried over the WUR signal.

2. The method according to claim 1, wherein the second wake-up signal is carried over a physical downlink control channel PDCCH or a reference signal.

3. The method according to claim 1 or 2, wherein receiving, by the terminal device, the first wake-up signal or the second wake-up signal based on the predetermined rule comprises:

   in receiving the first wake-up signal, starting, by the terminal device, a first timer in response to receiving the first wake-up signal, and receiving the second wake-up signal during operation of the first timer; and
   in receiving the second wake-up signal, restarting, by the terminal device, the first timer in response to receiving the second wake-up signal, and receiving the first wake-up signal in response the first timer being expired.

4. The method according to claim 3, wherein
   in receiving the first wake-up signal, starting, by the terminal device, the first timer in response to receiving the first wake-up signal, and receiving the second wake-up signal during operation of the first timer comprise:

   in receiving the first wake-up signal, starting, by the terminal device, the first timer immediately or upon a first time period in response to receiving the first wake-up signal, and receiving the second wake-up signal during operation of the first timer; and
   in receiving the second wake-up signal, restarting, by the terminal device, the first timer in response to receiving the second wake-up signal, and receiving the first wake-up signal in response to the first timer being expired comprise:
   in receiving the second wake-up signal, restarting, by the terminal device, the first timer in response to receiving the second wake-up signal, and receiving the first wake-up signal immediately or upon a second time period in response to the first timer being expired.

5. The method according to claim 1 or 2, wherein receiving, by the terminal device, the first wake-up signal or the second wake-up signal based on the DRX state comprises:

   receiving the first wake-up signal in response to the terminal device being in a short DRX cycle state; and
   receiving the second wake-up signal in response to the terminal device being in a long DRX cycle state.

6. The method according to claim 1 or 2, wherein receiving, by the terminal device, the first wake-up signal or the second wake-up signal based on the DRX state comprises:

starting a second timer in response to the terminal device entering a long DRX cycle state, receiving, by the terminal device, the second wake-up signal in response to the second timer being not expired, and receiving, by the terminal device, the first wake-up signal in response to the second timer being expired; and
not starting the second timer in response to the terminal device being in a short DRX cycle state, and not receiving, by the terminal device, a wake-up signal, or receiving the second wake-up signal.

7. The method according to claim 1 or 2, wherein receiving, by the terminal device, the first wake-up signal or the second wake-up signal based on the indication information comprises:

in receiving the first wake-up signal, receiving, by the terminal device, the second wake-up signal in response to receiving first indication information, wherein the first indication information comprises the first wake-up signal; and
in receiving the second wake-up signal, receiving, by the terminal device, the first wake-up signal in response to receiving second indication information.

8. The method according to claim 7, wherein
in receiving the first wake-up signal, receiving, by the terminal device, the second wake-up signal in response to receiving the first indication information comprises:

in receiving the first wake-up signal, receiving, by the terminal device, the second wake-up signal immediately or upon a third time period in response to receiving the first indication information; and
in receiving the second wake-up signal, receiving, by the terminal device, the first wake-up signal in response to receiving the second indication information comprises:
in receiving the second wake-up signal, receiving, by the terminal device, the first wake-up signal immediately or upon a fourth time period in response to receiving the second indication information.

9. The method according to claim 1 or 2, wherein receiving, by the terminal device, the first wake-up signal or the second wake-up signal based on the indication information comprises:
receiving, by the terminal device, the first wake-up signal based on third indication information in response to receiving the third indication information within an on duration.

10. The method according to any one of claims 6 to 8, wherein the indication information is carried over a control channel or a higher layer signaling.

11. The method according to claim 4 or 8, wherein the first time period, the second time period, the third time period, and/or the fourth time period are predefined or indicated by a network device.

12. The method according to claim 1 or 2, wherein receiving, by the terminal device, the first wake-up signal or the second wake-up signal based on the indication information comprises:

receiving the first wake-up signal in response to the terminal device entering a long DRX cycle state based on a timer or a higher layer command; and
receiving the second wake-up signal in response to the terminal device entering a short DRX cycle state based on the timer or the higher layer command.

13. The method according to any one of claims 1 to 12, wherein a time period of a timer is predefined or indicated by a network device.

14. The method according to claim 1 or 2, wherein receiving, by the terminal device, the first wake-up signal or the second wake-up signal based on the current state of the terminal device comprises:

receiving the second wake-up signal in response to the terminal device being in a connected state; and
receiving the first wake-up signal in response to the terminal device being in an idle state or an inactive state.

15. The method according to any one of claims 1 to 14, wherein a primary receiver of the terminal device is in an off state in receiving the first wake-up signal, and the primary receiver of the terminal device is in an on state in receiving the second wake-up signal.

16. An energy saving method for a terminal device, comprising:

transmitting, by a network device, a first wake-up signal or a second wake-up signal based on at least one of a predetermined rule, a discontinuous reception DRX state, indication information, or a current state of the terminal device, wherein the first wake-up signal is carried over a wake-up radio WUR signal, and the second wake-up signal is not carried over the WUR signal.

17. The method according to claim 16, wherein the second wake-up signal is carried over a physical downlink control channel PDCCH or a reference signal.

18. The method according to claim 16 or 17, wherein transmitting, by the network device, the first wake-up signal or the second wake-up signal based on the predetermined rule comprises:

in transmitting the first wake-up signal, starting, by the network device, a first timer in response to transmitting the first wake-up signal, and transmitting the second wake-up signal during operation of the first timer; and
in transmitting the second wake-up signal, restarting, by the network device, the first timer in response to transmitting the second wake-up signal, and transmitting the first wake-up signal in response to the first timer being expired.

19. The method according to claim 18, wherein

in transmitting the first wake-up signal, starting, by the network device, the first timer in response to transmitting the first wake-up signal, and transmitting the second wake-up signal during operation of the first timer comprise:
in transmitting the first wake-up signal, starting, by the network device, the first timer immediately or upon a first time period in response to transmitting the first wake-up signal, and transmitting the second wake-up signal during operation of the first timer; and
in transmitting the second wake-up signal, restarting, by the network device, the first timer in response to transmitting the second wake-up signal, and transmitting the first wake-up signal in response to the first timer being expired comprise:
in transmitting the second wake-up signal, restarting, by the network device, the first timer in response to transmitting the second wake-up signal, and transmitting the first wake-up signal immediately or upon a second time period in response to the first timer being expired.

20. The method according to claim 16 or 17, wherein transmitting, by the network device, the first wake-up signal or the second wake-up signal based on the DRX state comprises:

transmitting the first wake-up signal in response to the terminal device being in a short DRX cycle state; and
transmitting the second wake-up signal in response to the terminal device being in a long DRX cycle state.

21. The method according to claim 16 or 17, wherein transmitting, by the network device, the first wake-up signal or the second wake-up signal based on the DRX state comprises:

starting a second timer in response to the terminal device entering a long DRX cycle state, transmitting, by the network device, the second wake-up signal in response to the second timer being nor expired, and transmitting, by the network device, the first wake-up signal in response to the second timer being expired; and
not starting the second timer in response to the terminal device being in a short DRX cycle state, and not transmitting, by the network device, a wake-up signal, or transmitting the second wake-up signal.

22. The method according to claim 16 or 17, wherein transmitting, by the network device, the first wake-up signal or the second wake-up signal based on the indication information comprises:

in transmitting the first wake-up signal, transmitting, by the network device, the second wake-up signal in response to transmitting first indication information, wherein the first indication information comprises the first wake-up signal; and
in transmitting the second wake-up signal, transmitting, by the network device, the first wake-up signal in response to transmitting second indication information.

23. The method according to claim 22, wherein

in transmitting the first wake-up signal, transmitting, by the network device, the second wake-up signal in response to transmitting the first indication information comprises:
in transmitting the first wake-up signal, transmitting, by the network device, the second wake-up signal immediately or upon a third time period in response to transmitting the first indication information; and
in transmitting the second wake-up signal, transmitting, by the network device, the first wake-up signal in response to transmitting the second indication information comprises:
in transmitting the second wake-up signal, transmitting, by the network device, the first wake-up signal immediately or upon a fourth time period in response to transmitting the second indication information.

24. The method according to claim 16 or 17, wherein transmitting, by the network device, the first wake-up signal or the second wake-up signal based on the indication information comprises:
transmitting, by the network device, the first wake-up signal based on third indication information in response to transmitting the third indication information within an on duration.

25. The method according to any one of claims 22 to 24, wherein the indication information is carried over a control channel or a higher layer signaling.

26. The method according to claim 19 or 23, wherein the first time period, the second time period, the third time period, and/or the fourth time period are predefined or indicated by the network device.

27. The method according to claim 16 or 17, wherein transmitting, by the network device, the first wake-up signal or the second wake-up signal based on the indication information comprises:

transmitting the first wake-up signal in response to the terminal device entering a long DRX cycle state based on a timer or a higher layer command; and
transmitting the second wake-up signal in response to the terminal device entering a short DRX cycle state based on the timer or the higher layer command.

28. The method according to any one of claims 16 to 27, wherein a time period of a timer is predefined or indicated by the network device.

29. The method according to claim 16 or 17, wherein transmitting, by the network device, the first wake-up signal or the second wake-up signal based on the current state of the terminal device comprises:

transmitting the second wake-up signal in response to the terminal device being in a connected state; and
transmitting the first wake-up signal in response to the terminal device being in an idle state or an inactive state.

30. The method according to any one of claims 16 to 29, wherein a primary transmitter of the terminal device is in an off state in transmitting the first wake-up signal, and the primary transmitter of the terminal device is in an on state in transmitting the second wake-up signal.

31. A terminal device, comprising: a memory storing executable program codes; and a transceiver coupled to the memory; wherein the transceiver is configured to receive a first wake-up signal or a second wake-up signal based on at least one of a predetermined rule, a discontinuous reception DRX state, indication information, or a current state of the terminal device, wherein the first wake-up signal is carried over a wake-up radio WUR signal, and the second wake-up signal is not carried over the WUR signal.

32. The terminal device according to claim 31, wherein the second wake-up signal is carried over a physical downlink control channel PDCCH or a reference signal.

33. The terminal device according to claim 31 or 32, wherein the transceiver is further configured to:

in a case that the terminal device receives the first wake-up signal, start a first timer in response to receiving the first wake-up signal, and receive the second wake-up signal during operation of the first timer; and
in a case that the terminal device receives the second wake-up signal, restart the first timer in response to receiving the second wake-up signal, and receive the first wake-up signal in response to the first timer being expired.

34. The terminal device according to claim 33, wherein

the transceiver is further configured to: in the case that the terminal device receives the first wake-up signal, start a first timer immediately or upon a first time period in response to receiving the first wake-up signal, and receive the second wake-up signal during operation of the first timer; and
the transceiver is further configured to: in the case that the terminal device receives the second wake-up signal, restart the first timer in response to receiving the second wake-up signal, and receive the first wake-up signal immediately or upon a second time period in response to the first timer being expired.

35. The terminal device according to claim 31 or 32, wherein the transceiver is further configured to: receive the first wake-up signal in response to the terminal device being in a short DRX cycle state; and receive the second wake-up signal in response to the terminal device being in a long DRX cycle state.

36. The terminal device according to claim 31 or 32, wherein the transceiver is further configured to:

start a second timer in response to the terminal device entering a long DRX cycle state, receive the second wake-up signal in response to the second timer being not expired, and receive the first wake-up signal in response to the second timer being expired; and
not start the second timer in response to the terminal device being in a short DRX cycle state, and not receive a wake-up signal, or receive the second wake-up signal.

37. The terminal device according to claim 31 or 32, wherein the transceiver is further configured to:

in a case that the terminal device receives the first wake-up signal, receive the second wake-up signal in response to receiving first indication information, wherein the first indication information comprises the first wake-up signal; and
in a case that the terminal device receives the second wake-up signal, receive the first wake-up signal in response to receiving second indication information.

38. The terminal device according to claim 37, wherein

the transceiver is further configured to: in the case that the terminal device receives the first wake-up signal, receive the second wake-up signal immediately or upon a third time period in response to receiving the first indication information; and
the transceiver is further configured to: in the case that the terminal device receives the second wake-up signal, receive the first wake-up signal immediately or upon a fourth time period in response to receiving the second indication information.

39. The terminal device according to claim 31 or 32, wherein the transceiver is further configured to: receive the first wake-up signal based on third indication information in response to receiving the third indication information within an on duration.

40. The terminal device according to any one of claims 36 to 38, wherein the indication information is carried over a control channel or a higher layer signaling.

41. The terminal device according to claim 34 or 38, wherein the first time period, the second time period, the third time period, and/or the fourth time period are predefined or indicated by a network device.

42. The terminal device according to claim 31 or 32, wherein the transceiver is further configured to:

receive the first wake-up signal in response to entering a long DRX cycle state based on a timer or a higher layer command; and
receive the second wake-up signal in response to entering a short DRX cycle state based on the timer or the higher layer command.

43. The terminal device according to any one of claim 31 to 42, wherein a time period of a timer is predefined or indicated by a network device.

44. The terminal device according to claim 31 or 32, wherein the transceiver is further configured to:

　　receive the second wake-up signal in response to the terminal device being in a connected state; and
　　receive the first wake-up signal in response to the terminal device being in an idle state or an inactive state.

45. The terminal device according to any one of claim 31 to 44, wherein a primary receiver of the terminal device is in an off state in receiving the first wake-up signal, and the primary receiver of the terminal device is in an on state in receiving the second wake-up signal.

46. A network device, comprising: a memory storing executable program codes; and a transceiver coupled to the memory; wherein the transceiver is configured to transmit a first wake-up signal or a second wake-up signal based on at least one of a predetermined rule, a discontinuous reception DRX state, indication information, or a current state of the terminal device, wherein the first wake-up signal is carried over a wake-up radio WUR signal, and the second wake-up signal is not carried over the WUR signal.

47. The network device according to claim 46, wherein the second wake-up signal is carried over a physical downlink control channel PDCCH or a reference signal.

48. The network device according to claim 46 or 47, wherein the transceiver is further configured to:

　　in a case that the network device transmits the first wake-up signal, start a first timer in response to transmitting the first wake-up signal, and transmit the second wake-up signal during operation of the first timer; and
　　in a case that the network device transmits the second wake-up signal, restart the first timer in response to transmitting the second wake-up signal, and transmit the first wake-up signal in response to the first timer being expired.

49. The network device according to claim 48, wherein

　　the transceiver is further configured to: in the case that the network device transmits the first wake-up signal, start a first timer immediately or upon a first time period in response to transmitting the first wake-up signal, and transmit the second wake-up signal during operation of the first timer; and
　　the transceiver is further configured to: in the case that the network device transmits the second wake-up signal, restart the first timer in response to transmitting the second wake-up signal, and transmit the first wake-up signal immediately or upon a second time period in response to the first timer being expired.

50. The network device according to claim 46 or 47, wherein the transceiver is further configured to: transmit the first wake-up signal in response to the terminal device being in a short DRX cycle state, and transmit the second wake-up signal in response to the terminal device being in a long DRX cycle state.

51. The network device according to claim 46 or 47, wherein the transceiver is further configured to:

　　start a second timer in response to the terminal device entering a long DRX cycle state, transmit the second wake-up signal in response to the second timer being not expired, and transmit the first wake-up signal in response to the second timer being expired; and
　　not start the second timer in response to the terminal device being in a short DRX cycle state, and not transmit a wake-up signal, or transmit the second wake-up signal.

52. The network device according to claim 46 or 47, wherein the transceiver is further configured to:

　　in a case that the network device transmits the first wake-up signal, transmit the second wake-up signal in response to transmitting first indication information, wherein the first indication information comprises the first wake-up signal; and
　　in a case that the network device transmits the second wake-up signal, transmit the first wake-up signal in response to transmitting second indication information.

53. The network device according to claim 52, wherein

the transceiver is further configured to: in the case that the network device transmits the first wake-up signal, transmit the second wake-up signal immediately or upon a third time period in response to transmitting the first indication information; and

the transceiver is further configured to: in the case that the network device transmits the second wake-up signal, transmit the first wake-up signal immediately or upon a fourth time period in response to transmitting the second indication information.

54. The network device according to claim 46 or 47, wherein the transceiver is further configured to: transmit the first wake-up signal based on third indication information in response to transmitting the third indication information within an on duration.

55. The network device according to any one of claims 52 to 54, wherein the indication information is carried over a control channel or a higher layer signaling.

56. The network device according to claim 49 or 53, wherein the first time period, the second time period, the third time period, and/or the fourth time period are predefined or indicated by the network device.

57. The network device according to claim 46 or 47, wherein the transceiver is further configured to:

transmit the first wake-up signal in response to the terminal device entering a long DRX cycle state based on a timer or a higher layer command; and
transmit the second wake-up signal in response to the terminal device entering a short DRX cycle state based on the timer or the higher layer command.

58. The network device according to any one of claims 46 to 57, wherein a time period of a timer is predefined or indicated by the network device.

59. The network device according to claim 46 or 47, wherein the transceiver is further configured to:

transmit the second wake-up signal in response to the terminal device being in a connected state; and
transmit the first wake-up signal in response to the terminal device being in an idle state or an inactive state.

60. The network device according to any one of claims 46 to 59, wherein a primary transmitter of the terminal device is in an off state in transmitting the first wake-up signal, and the primary transmitter of the terminal device is in an on state in transmitting the second wake-up signal.

61. A terminal device, comprising: a transceiver module, configured to receive a first wake-up signal or a second wake-up signal based on at least one of a predetermined rule, a discontinuous reception DRX state, indication information, or a current state of the terminal device, wherein the first wake-up signal is carried over a wake-up radio WUR signal, and the second wake-up signal is not carried over the WUR signal.

62. A network device, comprising: a transceiver module, configured to transmit a first wake-up signal or a second wake-up signal based on at least one of a predetermined rule, a discontinuous reception DRX state, indication information, or a current state of the terminal device, wherein the first wake-up signal is carried over a wake-up radio WUR signal, and the second wake-up signal is not carried over the WUR signal.

63. A computer-readable storage medium, storing instructions, wherein the instructions, when loaded and executed by a processor, cause the processor to perform the method as defined in any one of claims 1 to 15 or the method as defined in any one of claims 16 to 30.

Energy saving signal instructing to monitor PDCCH

Energy saving signal instructing to not monitor PDCCH

Energy saving signal instructing to not monitor PDCCH

Energy saving signal instructing to monitor PDCCH

0

1

2

3

DRX cycle

FIG. 1A

Energy saving signal instructing to monitor PDCCH

Energy saving signal instructing to not monitor PDCCH

Energy saving signal instructing to monitor PDCCH

Paging occasion PO or paging frame PF

PO or PF

PO or PF

FIG. 1B

Energy saving signal

Primary receiver of UE

Wake-up signal

Wake-up receiver

FIG. 1C

DRX cycle

PF

PO

FIG. 1D

On duration

Monitor PDCCH

Opportunity for DRX

Can not monitor PDCCH

DRX cycle

FIG. 1E

On duration

Data transmission scheduling

drx-InactivityTimer being expired or receiving MAC CE

drxShortCycleTimer being expired or receiving MAC CE

Long DRX cycle

Continuous Reception

Short DRX cycle Short DRX cycle

Long DRX cycle

FIG. 1F

Network device

Core network device

Access network device

Terminal device

Terminal device

FIG. 2

Network device

Terminal device

301 Transmitting a first wake-up signal or a second wake-up signal based on at least one of a predetermined rule, a DRX state, indication information, or a current state of a terminal device

FIG. 3

FIG. 4A

FIG. 4B

FIG. 4C

FIG. 4D

Terminal device

Transceiver module 501

FIG. 5

Network device

Transceiver module 601

FIG. 6

FIG. 7

Network device

Memory 801 — Transceiver 802

FIG. 8

**INTERNATIONAL SEARCH REPORT**

| | International application No. |
|---|---|
| | **PCT/CN2021/142953** |

**A. CLASSIFICATION OF SUBJECT MATTER**

H04W 52/02(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT, WPI, EPODOC, IEEE, 3GPP, CNKI: 主收发机, 主接收机, 唤醒接收机, 唤醒收发机, 唤醒信号, 非连续, 周期, main radio, WUR, WUS, DRX, period

**C. DOCUMENTS CONSIDERED TO BE RELEVANT**

| Category* | Citation of document, with indication, where appropriate, of the relevant passages | Relevant to claim No. |
|---|---|---|
| X | CN 113038578 A (HUAWEI TECHNOLOGIES CO., LTD.) 25 June 2021 (2021-06-25) description, paragraphs 0002 and 0034-0120 | 1-63 |
| A | CN 107979443 A (HUAWEI TECHNOLOGIES CO., LTD.) 01 May 2018 (2018-05-01) entire document | 1-63 |
| A | CN 108064073 A (HUAWEI TECHNOLOGIES CO., LTD.) 22 May 2018 (2018-05-22) entire document | 1-63 |
| A | CN 107979866 A (HUAWEI TECHNOLOGIES CO., LTD.) 01 May 2018 (2018-05-01) entire document | 1-63 |
| A | WO 2021004607 A1 (TELEFONAKTIEBOLAGET LM ERICSSON (PUBL)) 14 January 2021 (2021-01-14) entire document | 1-63 |
| A | LIU, Renzhi et al. "An 802.11ba-Based Wake-Up Radio Receiver with Wi-Fi Transceiver Integration" *IEEE Journal of Solid-State Circuits*, Vol. 55, No. 5, 24 December 2019 (2019-12-24), entire document | 1-63 |

☐ Further documents are listed in the continuation of Box C. ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 June 2022** | **28 June 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2021/142953**

| Patent document cited in search report | | | Publication date (day/month/year) | Patent family member(s) | | | Publication date (day/month/year) |
|---|---|---|---|---|---|---|---|
| CN | 113038578 | A | 25 June 2021 | WO | 2018192374 | A1 | 25 October 2018 |
| | | | | CN | 108738109 | A | 02 November 2018 |
| | | | | IN | 201947046458 | A | 22 November 2019 |
| | | | | VN | 68370 | A | 30 January 2020 |
| | | | | EP | 3609241 | A1 | 12 February 2020 |
| | | | | US | 2020053648 | A1 | 13 February 2020 |
| CN | 107979443 | A | 01 May 2018 | EP | 3522613 | A1 | 07 August 2019 |
| | | | | WO | 2018076988 | A1 | 03 May 2018 |
| CN | 108064073 | A | 22 May 2018 | WO | 2018086357 | A1 | 17 May 2018 |
| | | | | US | 2019268842 | A1 | 29 August 2019 |
| CN | 107979866 | A | 01 May 2018 | US | 2019253973 | A1 | 15 August 2019 |
| | | | | WO | 2018076749 | A1 | 03 May 2018 |
| WO | 2021004607 | A1 | 14 January 2021 | EP | 3994920 | A1 | 11 May 2022 |

Form PCT/ISA/210 (patent family annex) (January 2015)